# EUROPÄISCHE PATENTSCHRIFT

(11) **EP 1 395 475 B1**
(45) Veröffentlichungstag und Bekanntmachung des Hinweises auf die Patenterteilung: **08.08.2007**
(21) Anmeldenummer: 02730226.4
(22) Anmeldetag: 30.04.2002
(51) Int. Cl.: B60T 7/12, B60T 8/48

(54) **VERFAHREN ZUM HALTEN EINES FAHRZEUGS AN EINEM HANG UND ANFAHRHILFE ZUM HALTEN EINES FAHRZEUGS AN EINEM HANG**
METHOD FOR HOLDING A VEHICLE ON AN INCLINE AND STARTING TRACTION CONTROL FOR HOLDING A VEHICLE ON AN INCLINE
PROCEDE PERMETTANT D'IMMOBILISER UN VEHICULE DANS UNE PENTE ET DISPOSITIF AUXILIAIRE DE DEMARRAGE PERMETTANT D'IMMOBILISER UN VEHICULE DANS UNE PENTE

(30) Priorität: 09.05.2001 DE 10122580
(43) Veröffentlichungstag der Anmeldung: 10.03.2004
(73) Patentinhaber: Continental Teves AG & Co. oHG, 60488 Frankfurt (DE)
(72) Erfinder: KLEY, Ronald, 63500 Seligenstadt (DE); KLUSEMANN, Rainer, 60529 Frankfurt am Main (DE); EWERT, Thomas, 61130 Nidderau (DE)
(74) Vertreter: Graf, Ulrich
(86) Internationale Anmeldenummer: PCT/EP2002/004755
(87) Internationale Veröffentlichungsnummer: WO 2002/090159

(56) Entgegenhaltungen:
- EP-A- 0 965 509
- EP-A- 1 013 519
- WO-A-93/22169
- WO-A-97/02969
- DE-A- 4 002 865
- DE-A- 4 439 890
- DE-A- 19 625 919
- US-A- 4 971 400
- US-A- 5 458 406
- US-A- 6 082 830

## Beschreibung

Die Erfindung betrifft ein Verfahren und eine Anfahrhilfe zum Halten eines Fahrzeugs an einem Hang durch Einsteuern eines Bremsdrucks in die Radbremsen einer Bremsanlage.

Verfahren zum Halten des Fahrerbremsdruckes und entsprechende Bremsdruck-Haltevorrichtungen sind in Verbindung mit Anfahrhilfen bekannt. Eine Anfahrhilfe ist eine komfortorientierte Assistenzfunktion, die den Fahrer beim Anfahren am Hang entlasten soll.

Dem Fahrer wird beim Einleiten des Anfahrvorgangs im Stillstand derart assistiert, daß das Fahrzeug am Hang gebremst gehalten wird und der Fahrer eine zuvor betätigte Bremseinrichtung lösen kann, um anzufahren, ohne daß das Fahrzeug unkontrolliert wegrollt. Damit wird der Zeitraum zwischen dem Lösen einer Bremse und dem eigentlichen Anfahrvorgang überbrückt. Es sind Verfahren zum Halten des Fahrerbremsdruckes bekannt, die mit Hilfe einer aktiven Betriebsbremse einen Bremsdruck, ein Bremsmoment oder eine Bremskraft aktiv aufbauen und halten. Dieser aktive Bremseingriff findet statt, wenn Aktivierungskriterien einer Anfahrhilfe erfüllt sind. Für Bremsanlagen , wie z.B. eine elektrohydraulische oder elektromechanische Bremse, elektrische Parkbremse oder eine Bremsanlage mit aktivem Bremskraftverstärker, stellt das Halten des Bremsdrucks an sich kein Problem dar, da in diesen Bremsanlagen ein ansteuerbarer Fremddrukkerzeuger, also eine Fahrer unabhängige Druckquelle, vorgesehen ist.

Ein aktiver Bremsdruckaufbau findet bei einer Anfahrhilfe im Stillstand des Fahrzeugs statt, da erst im Stillstand die Anfahrhilfe aktiviert wird. Anfahrhilfen mit Bremsanlagen, die mit einer ESP- oder ASR-Regelung ausgestattet sind, verfügen über ansteuerbare Ventile und ein Motorpumpenaggregat. In der Regel kann der Halte - Bremsdruck in diesen Bremsanlagen auf der Basis von Drucksensoren, die dem Hauptbremszylinder zugeordnet sind, genau eingestellt werden.

Daneben hat es bereits Überlegungen gegeben, den Bremsdruck in diesen Bremsanlagen mit einem ansteuerbaren Absperrventil in der Bremsleitung zu halten. Hierbei wird die Verbindung der Bremsleitung zu dem Hauptbremszylinder geschlossen und das Bremsfluid auf dem vom Fahrer eingesteuerten "Halte - Bremsdruck" in der Bremsleitung eingesperrt. Als Absperrventile bieten sich bei ASR- und ESP-Bremsanlagen die dort verwendeten Trennventile an, die , sobald die Aktivierungskriterien erfüllt sind, von ihrer unbestromten offenen Grundstellung in ihre bestromte geschlossene Schaltstellung geschaltet werden müssen.

Der Anfahrvorgang selbst wird über eine geeignete Auswertung von Fahrzeuginformationen festgestellt und als Antriebsmoment quantifiziert, das über die Kupplung an die Antriebsräder geleitet wird. Die Anfahrhilfe assistiert dann beim Anfahrvorgang durch Reduktion des Bremsmoments nach Maßgabe des an den Antriebsrädern vorliegenden Antriebsmoments. Wird vom Fahrer ausreichend Antriebsmoment über die Kupplung an den Antriebsrädern aufgebaut, reduziert die Anfahrhilfe das Bremsmoment auf Null bis eine weitere Systemaktivierung durch den Fahrer eingeleitet wird (WO 99/20921).

Dabei kann die Druckhaltezeit bzw. Anfahrhilfe Unterstützungszeit dieser Anfahrhilfen zeitlich stark eingeschränkt werden (z.B. max. einige Sekunden), wenn Leckagen an den Hydraulikkomponenten, wie den Ventilen, Pumpen und am Hauptbremszylinder, auftreten, aufgrund denen der Halte-Bremsdruck während der Anfahrhilfe Unterstützungszeit sich verringert. Bei einer deutlichen Verlängerung der Druckhaltezeit bzw. Anfahrhilfe Unterstützungszeit, z.B. auf bis zu vier Minuten, ist aufgrund der hydraulischen Leckage an den Hydraulikkomponenten eine Regelung des Bremsdrucks mit aktiver Druckerhöhung immer vorzusehen, um ein unerwünschtes Wegrollen des Fahrzeugs am Hang sicher auszuschließen. Hierzu würden Drucksensoren in beiden Bremskreisen benötigt. Diese verursachen zusätzliche Kosten.

Der Erfindung liegt die Aufgabe zugrunde, ein vorzugsweise kostengünstiges Verfahren zum Halten des Fahrerbremsdruckes über einen längeren Zeitraum und eine entsprechende Anfahrhilfe zu schaffen.

Bei Hydraulik-Bremsanlagen können nach einer modellbasierten Ermittlung der Druckverluste ("Worst Case" - Berechnung) aufgrund von Leckagen an den einzelnen Hydraulikkomponenten, die aus diesen Druckverlusten ermittelten Abweichungen zwischen dem erforderlichen Bremsdruck und dem in den Radbremsen vorhandenen "Ist-Bremsdruck" über der Zeit mittels der Hydraulikpumpe nachgeregelt werden. Werden dabei jedoch die "Ist-Bremsdrücke" in den beiden Bremskreisen nicht gemessen, so kommt es bei Bremsanlagen mit sogenannten "Schaltventilen"(Auf-Zu-Ventilen) dazu, daß aufgrund der "Worst-Case" Berechnung der Ist-Bremsdruck mehr oder weniger hoch über dem eigentlich benötigten Bremsdruck liegt. Der Bremsdruck kann dabei eine Größe erreichen, die das Überdruckventil öffnet, mittels dem das Einlaßventil der Bremsanlage abgesichert ist. Je höher aber der Systemdruck ist, um so höher kann auch der Verschleiß der Hydraulikkomponenten der Bremsanlage werden und um so höher werden die Geräuschemissionen. Hinzu kommt, daß der Komfort für die Anfahrhilfe schlechter wird, da der zu hohe Bremsdruck dem Fahrer beim Anfahrvorgang den Eindruck vermittelt, dass das Fahrzeug noch festgehalten wird, während es im zeitlichen Funktionsablauf bereits anfahren sollte.

Erfindungsgemäß wird diese Aufgabe dadurch gelöst, daß bei einem gattungsgemäßen Verfahren die folgenden Schritte erfüllt sind:
a) Ermitteln des zum Halten erforderlichen Bremsdrucks
b1) Ermitteln einer Zeitspanne nach Maßgabe einer in einem Modell ermittelten Verringerung des Bremsdrucks, insbesondere aufgrund von Leckage der Bremsanlage, ab dem Lösen des Bremspedals oder
b2) Vergleichen des ermittelten Bremsdrucks mit dem in dem Modell bestimmten tatsächlichen Bremsdruck, ab dem Lösen des Bremspedals und Erhöhen des Bremsdrucks in den Radbremsen, durch
c1) Einschalten eines Druckerzeugers
c2) Öffnen eines zwischen Hauptbremszylinder und Saugseite des Druckerzeugers angeordneten Umschaltventils
c3) Steuern eines zwischen Hauptbremszylinder und Radbremse angeordnetem Trennventils derart, daß sich mindestens der zum Halten erforderliche Bremsdruck in den Radbremsen einstellt.

Hierdurch wird eine Regelung des Halte - Bremsdrucks bei sich verringerndem Bremsdruck in den Radbremsen nach dem Lösen des Bremspedals aufgrund von Leckage/Druckverlusten an den einzelnen Hydraulikkomponenten auf einen Wert möglich, der mindestens auf dem Halte-Bremsdruck liegt und der maximal nur eine, durch ein Toleranzfeld der gesteuerten Ventile bestimmte Abweichung in seiner Erhöhung zulässt. Dabei ist es nicht nötig, in den Bremskreisen Drucksensoren vorzusehen, da über die modellbasierte Ermittlung der Druckverluste über der Zeit entweder nach einer geschätzten Zeitspanne (Merkmal b1) oder nach einen Vergleich des ermittelten Bremsdrucks mit um die Druckverluste reduzierten "tatsächlichen" bzw. Ist-Bremsdrücken (Merkmal b2), die beispielsweise in einer Tabelle o.dgl. abgelegt sein können, die Regelung gestartet wird.

Gegenstand der Erfindung ist ferner, eine gattungsgemäße Anfahrhilfe mit einem Trennventil so auszugestalten, daß das zwischen Hauptbremszylinder und Einlaßventil angeordnete Trennventil als analoges oder analogisiertes Ventil ausgebildet und nach dem Programm der Regeleinheit über einen Ansteuerstrom derart angesteuert wird, daß es in Abhängigkeit von einem am Hang in einem Modell ermittelten Halte-Bremsdruck beim Lösen des Pedals nach einem funktionalen Zusammenhang durch Einschalten des Druckerzeugers und Öffnen des zwischen Hauptbremszylinder und Saugseite des Druckerzeugers angeordneten Umschaltventils mindestens auf einen auf dem Halte-Bremsdruck liegenden Brems druck eingestellt

Als analoge oder analogisierte Ventile finden Schieberventile, Proportionalventile oder bevorzugt analogisierte Schaltventile Verwendung.

Analogisierte Trennventile arbeiten ähnlich wie Schaltventile mit dem Unterschied, dass mit dem eingestellten Ventilstrom auch eine in einem Toleranzfenster definierte Druckdifferenz am Ventil eingestellt wird. Ist nun nach der modellbasierten "Worst Case" - Berechnung die Leckage bzw. der Druckverlust über der Zeit bestimmt, dann kann damit der Zeitpunkt der Regelung nach dem Lösen des Bremspedals festgelegt werden. Wird nun der Druickerzeuger zur Druckerhöhung eingeschaltet und gleichzeitig der Ansteuerstrom des analogisierten Trennventils gemäß dem erforderlichen Hydraulikdruck eingestellt, so kann in Abhängigkeit von der Streunung des analogisierten Trennventils der in die Radbremsen eingesteuerte Bremsdruck maximal leicht gegenüber dem gewollten Soll-Bremsdruck ansteigen. Das analogisierte Trennventil bekommt in diesem Fall die Funktion eines einstellbaren Druckbegrenzungsventil.

Es ist daher zweckmäßig, die Verwendung des zwischen dem Hauptbremszylinder und dem Einlassventil angeordneten analogen oder analogisierten Trennventils der erfindungsgemäßen Anfahrhilfe als regelbares Druckbegrenzungsventil zum Halten eines Fahrzeugs an einem Hang vorzusehen.

Vorteilhaft ist, daß zur Ermittlung des zum Halten erforderlichen Bremsdrucks der vom Fahrer über die Bremspedalbetätigung oder der über einen Druckerzeuger in die Radbremsen eingesteuerte Bremsdruck über einen Drucksensor erfaßt oder über ein Modell geschätzt wird.

Der über den Drucksensor ermittelte Halte - Bremsdruck wird vorteilhaft in einem elektrischen bzw. elektronischen Speicher abgelegt.

Mittels eines Bremslichtschalters, eines Löseschalters am Bremspedal oder der Auswertung des vom Drucksensor ermittelten Druckgradienten kann das für das Verfahren zweckmäßige Lösen des Bremspedals erfaßt werden, um den Zeitpunkt zu bestimmen, ab dem eine selbsttätige Verringerung des Halte - Bremsdrucks eintritt.

Weiterhin vorteilhaft ist, daß der in den Radbremsen verringerte Bremsdruck innerhalb einer in einem funktionalen Zusammenhang zum erforderlichen Halte-Bremsdruck stehenden Zeitspanne in der Radbremse wieder erhöht wird.

Das Verfahren und die Anfahrhilfe sehen vorteilhaft vor, daß während der Erhöhung des Bremsdrucks über den eingeschalteten Druckerzeuger mindestens ein analoges oder analogisiertes Ventil auf den Halte-Bremsdruck so gesteuert wird, daß der in die Radbremsen eingesteuerte Bremsdruck auf oder oberhalb der unteren Ventilstrom-/Druckkennline und innerhalb der durch ein Toleranzfeld des analogen oder analogisierten Ventils vorgegebenen Abweichung liegt.

Ferner kann es vorteilhaft sein, daß ein in die Radbremsen eingesteuerter maximaler Bremsdruck nach Maßgabe der oberen Ventilstrom-/Druckkennline des Toleranzfeldes der analogen oder analogisierten Ventile eingestellt wird.

Damit das Fahrzeug mit der Anfahrhilfe am Hang auch immer sicher gehalten wird wenn der Fahrer die Betriebsbremse löst um anzufahren, ist es notwendig, den vom Fahrer eingestellten maximalen Bremsdruck auch in der Bremse einzusperren. Hierzu ist es vorteilhaft, gemäß der Ansteuerstrom / Druckkennlinie des analogisierten Trennventils schon vor Aktivierung der Anfahrhilfe, wenn der Fahrer noch die Betriebsbremse betätigt, das Trennventil zu bestromen. Hierzu wird der Ansteuerstrom unterhalb der Strom-/Druck-Kennlinie gewählt, damit der Fahrer keinen negativen Einfluß des "geschlossenen" Trennventils spürt (z.B entsprechend der Strom- / Druckkennlinie des analogisierten Trennventils).

Durch das Ermitteln des Halte-Bremsdrucks in dem Modell, dem als Eingangsgröße die Signale eines Längsbeschleunigungssensors zugeführt werden, ist es möglich die Steigung des Hangs zu berechnen. Aus der Steigung des Hangs kann in bekannter Weise der Halte - Bremsdruck ermittelt werden.

Nach einem bevorzugten Ausführungsbeispiel erfolgt das Ermitteln des Halte-Bremsdrucks mittels eines Drucksensors, der den vom Fahrer in die Radbremse(n) eingesteuerten Bremsdruck beim Halten erfaßt.

Vorteilhaft ist, daß der Halte-Bremsdruck in einem Speicher abgelegt und beim Lösen des Pedals mit in einer Tabelle abgelegten Bremsdrücken verglichen wird, die die um die Leckageverluste verringerten Bremsdrücke wiedergeben und daß die Pumpe eingeschaltet und das analoge oder analogisierte Trennventil auf den Halte - Bremsdruck eingestellt wird, wenn der verringerte Bremsdruck einen vorgegebenen Wert erreicht hat.

Ferner ist es zweckmäßig, daß die Regeleinheit einen Zeitgeber oder Zähler aufweist, daß der Wert des Zeitgebers oder Zählers ab dem Lösen des Bremspedals erhöht wird und daß die Pumpe eingeschaltet, das Umschaltventil geöffnet und das analoge oder analogisierte Trennventil auf den Halte - Bremsdruck eingestellt wird, wenn der Zeitgeber oder Zähler einen vorgegebenen Wert erreicht oder überschritten hat.

Zweckmäßig wird die Größe des Wertes in Abhängigkeit vom Halte-Bremsdruck vorgegeben.

Das Verfahren bzw. die Anfahrhilfe benötigen vorteilhaft keine zusätzlichen Drucksignale bzw. Drucksensoren zur Überwachung des Raddruckniveaus.
Darüber hinaus besteht bei dem Verfahren bzw. der Anfahrhilfe keine Gefahr, dass der Bremsdruck unkontrolliert in zu hohe Druckniveaus gerät und damit der Komfort der Anfahrhilfe beeinträchtigt wird und der Verschleiß der Hydraulikkomponenten ansteigt.

Vorteilhafte Weiterbildungen sind in den Unteransprüchen angegeben und werden im Folgenden näher beschrieben.

Es zeigen
- Fig.1: einen Hydraulikschaltplan der Bremsanlage,
- Fig.2: ein Diagramm über die Druck- / Strom - Kennlinien eines analogisierten Trennventils
- Fig.3: ein Diagramm über die Bremsdruckwerte/Ansteuerströme der Trennventile
- Fig.4: ein Flußdiagramm über den Verfahrensablauf der Anfahrhilfe

Die Bremsanlage besitzt einen Hauptzylinder 1, der an einen Vorratsbehälter 2 angeschlossen ist und von einem Bremspedal 3 betätigbar ist. Vom Hauptzylinder 1 gehen zwei Bremsleitungen 4 und 5 aus, welche jeweils einen Bremskreis I bzw. II versorgen. Mindestens eine Bremsleitung 4 weist unterhalb des Hauptzylinders 1 einen Drucksensor 27 auf, der dazu dient, einen Fahrerbremswunsch zu ermitteln. Beispielsweise über einen Bremslichtschalter am Bremspedal 3 wird ermittelt, ob- oder ob nicht - mit dem Bremspedal 3 gebremst wird. Die beiden Bremskreise I und II sind identisch aufgebaut. Ihre beiden Rückförderpumpen 6 und 7 können einen gemeinsamen Antriebsmotor aufweisen.
Die nun folgende Beschreibung des Bremskreises I trifft ebenso auf den Bremskreis II zu. Die Bremsleitung 4 verläuft über ein analogisiertes Trennventil 8, 8' zu den Einlaßventilen 9 und 10 der Radbremsen 11 und 12. Von den Radbremsen 11 und 12 führen Rücklaufleitungen 13 und 14 zu einem Niederdruckspeicher 15. In den Rücklaufleitungen 13 und 14 befinden sich Auslaßventile 16 und 17. Einlaßventile 9,10 und Auslaßventile 16,17 sind elektromagnetisch betätigbare 2/2-Wegeventile. Während die Einlaßventile stromlos offen sind, sind die Auslaßventile stromlos geschlossen. Der Niederdruckspeicher 15 ist über ein Rückschlagventil 18 mit der Saugseite der Rückförderpumpe 6 verbunden, welche mit ihrer Druckseite an die Bremsleitung 4 zwischen dem Trennventil 8, 8'einerseits und den Einlaßventilen 9 und 10 andererseits anschließt. Die Rückförderpumpe 6 ist selbstansaugend und besitzt eine Saugleitung 19 zur Bremsleitung 4 zwischen Hauptzylinder 1 und analogisiertem Trennventil 8, 8'. In die Saugleitung 19 ist ein elektromagnetisch betätigtes Umschaltventil 20, 20' eingefügt. Es ist stromlos geschlossen und wird zu einem Druckaufbau geöffnet, wenn die Rückförderpumpe 6 Druckmittel über die Bremsleitung 4 und den Hauptzylinder 1 aus dem Vorratsbehälter 2 ansaugen muß.

Jedem Rad der Radbremsen 11,12,23 und 24 ist ein Drehzahlmesser 29,30,31,32 zugeordnet. Diese Drehzahlmesser dienen der Geschwindigkeitserfassung der Räder, also zur Bestimmung einer Fahrzeugreferenzgeschwindigkeit, zum Erkennen des Fahrzeugstillstandes, und zur Schlupferkennung.

Die Bremskreisaufteilung ist beliebig, es kann eine diagonale Bremskreisaufteilung bestehen, wobei an den Bremskreis I die Radbremsen des rechten Hinterrades und des linken Vorderrades angeschlossen seien, während der Bremskreis II die Radbremsen des rechten Vorderrades und des linken Hinterrades versorgt.

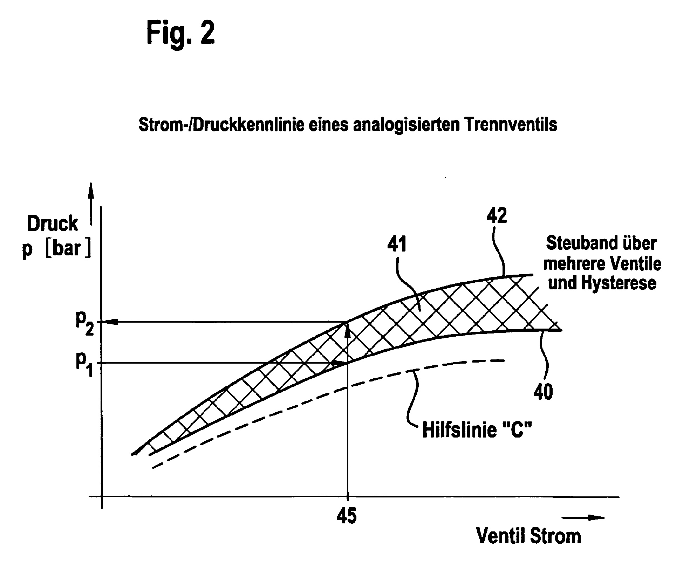

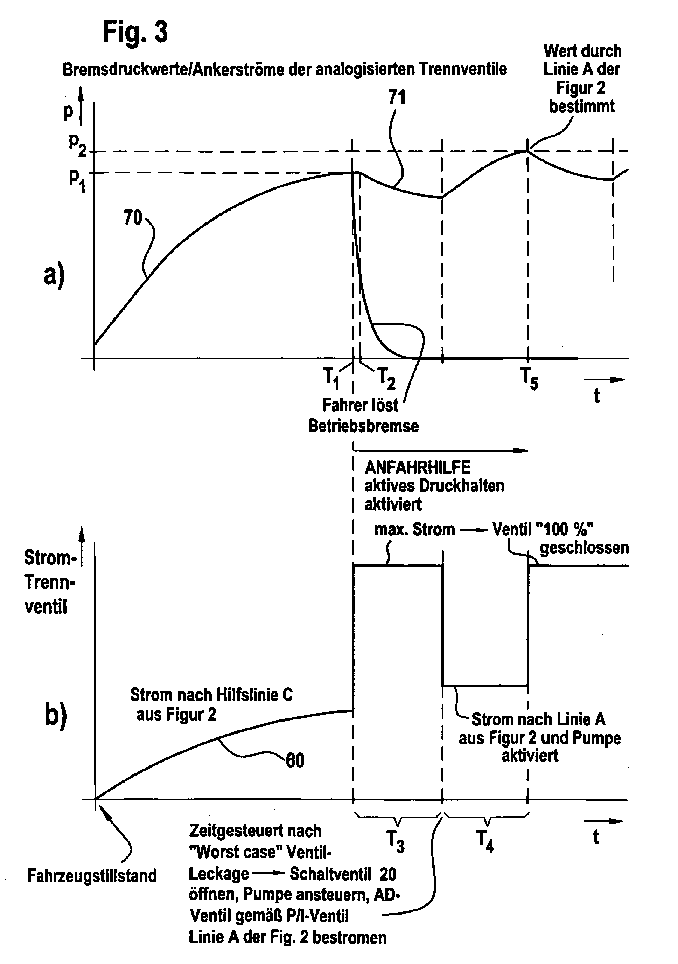

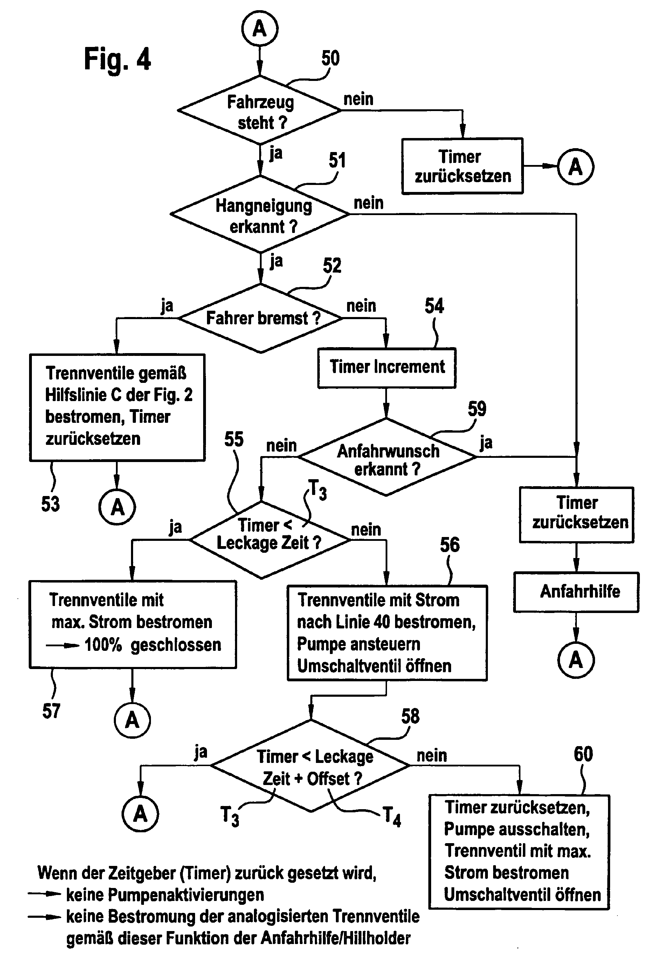

Die zweikreisige hydraulische Bremsanlage I , II arbeitet als Anfahrhilfe, die über Ansteuersignale von der Regeleinrichtung 33 kontrolliert wird. Die Regeleinrichtung 33 enthält einen Speicher 34, einen Zähler 37 und ein Modell 35, zur Berechnung der Leckage/Druckverluste der Hydraulikkomponenten 6, 7, 8, 9, 10, 16, 20 über der Zeit. Wie Figur 4 zeigt, wird ermittelt, ob das Fahrzeug steht (Raute 50), die Hangneigung erkannt ist (Raute 51)und der Fahrer bremst (Raute 52). Die Anfahrhilfe wird folglich nur dann aktiviert, wenn der Fahrer sein betriebsbereites Fahrzeug selbst in den Stillstand mit dem zum Halten benötigten Bremsdruck p1 gebracht hat. Der Drucksensor 27 erfaßt dabei den Halte-Bremsdruck p1 der im Speicher 34 abgelegt wird und somit als Soll-Halte-Bremsdruck p1 zur Verfügung steht. Durch Betätigen des Pedals 3 wird Druckmittel aus dem Hauptbremszylinder 1 über die Bremsleitungen 4,5 in die Radbremszylinder 11, 12, 23, 24 verdrängt. In den Bremskreisen I; II ist jeweils ein ansteuerbares analogisiertes Trennventil 8, 8' angeordnet, das in seiner Grundstellung stromlos offen ist und in seiner mit dem maximalen Ansteuerstrom bestromten Schaltstellung die Bremsleitungen 4, 5 gegenüber dem Hauptzylinder 1 sperrt. Jedes Trennventil 8, 8' wird von einer Bypassleitung mit einem Rückschlagventil 21, 22 überbrückt, das zu den Radbremsen hin öffnet, und somit bei Betätigung des Bremspedals ein Einbremsen auch bei geschlossenem Trennventil 8, 8' erlaubt. Die Regeleinrichtung 33 erfasst eine über das Signal des Bremslichtschalters 26 oder anderweitig detektierte Haltesituation. Die Signale der Haltesituation können nach einem Ausführungsbeispiel auch aus den Signalen der Raddrehzahlsensoren 29-32 ermittelt werden. Die Hangneigung kann in bekannter Weise aus den Signalen 36 eines Längsbeschleunigungs-Sensors ermittelt werden. Sobald die Aktivierungskriterien in Raute 50 und 51 der Figur 4 erfüllt sind, wird die Anfahrhilfe aktiv geschaltet. Ist die Anfahrhilfe also aktiviert, so wird in Raute 53 die Betätigung des Bremspedals 3 betrachtet. Liegt eine Betätigung des Bremspedals 3 vor, werden in Schritt 53 die Trennventile 8, 8' gemäß der Ansteuerstrom- Bremsdruck-Kennline C der Figur 2 bestromt, damit der vom Fahrer eingestellte maximale Bremsdruck p1 unmittelbar nach dem Zeitpunkt T1 zum Zeitpunkt T2 sofort in der Bremse eingesperrt werden kann (Figur 3). Der Ansteuerstrom 60 liegt dabei soweit unterhalb der Strom-/Druck-Kennlinie 40 (Figur 2), -dass der Fahrer keinen negativen Einfluß der teilweise geschlossenen Trennventile 8 spürt, die Trennventile 8, 8' jedoch nahezu sofort ihre Absperrstellung einnehmen können, wenn das Lösen des Bremspedals 3 erfasst ist.

Liegt das vom Bremslichtschalter oder einer anderen Einrichtung abgegebene Signal 26 vor, daß das Bremspedal 3 vom Fahrer nicht mehr betätigt wird, wird erstmals bei Eintritt in die Regelung ein Zähler 37 oder Zeitgeber im Schritt 54 gestartet, der bis zum Erreichen der in Raute 55 dargestellten Leckage Zeit nach der Grenzwertbetrachtung Timer < Leckage Zeit hochgesetzt wird. Solange der Zähler 37 (Timer) den Wert W_{grenz} ≥ Leckage Zeit noch nicht erreicht hat, werden in Schritt 57 die Trennventile 8, 8' mit dem maximalen Ansteuerstrom bestrommt. Sie sperren die Bremsleitungen 4 bzw. 5 gegenüber dem Hauptbremszylinder vollständig ab. Erreicht oder überschreitet der Zähler 37 einen vorgegebenen Wert W_{grenz} oder ermittelt der Zeitgeber eine Zeitdauer, bei oder nach dem ein vorgegebener, nachzuregelnder Druckverlust aufgrund von Leckage der Hydraulikkomponenten stattgefunden hat, wird in Schritt 56 das Schaltventil 20, 20' geöffnet, die Pumpe z.B. 6 angesteuert und das analogisierte Trennventil 8,8' mit einem dem Soll-Halte-Bremsdruck (Linie 40 der Figur 2) entsprechenden Ansteuerstrom angesteuert. Das analogisierte Trennventil 8, 8' arbeitet dann als "einstellbares Druckbegrenzungsventil".

Figur 3 a) und b) zeigen Kennlinien über die Bremsdruckwerte (Fig.3a) und die Ansteuerströme (Fig.3b) der Trennventile 8, 8' über der Zeit t. Während der Fahrer Bremsdruck (Kennline 70) in die Radbremsen 11, 12 23, 24 einsteuert, bis er den Halte-Bremsdruck p1 erreicht hat, bestromt die Regeleinheit 33 die Trennventile 8, 8' nach Maßgabe des Fahrerbremsdrukkes entsprechend der Kennline 60 so, daß der Durchfluß der Bremsflüssigkeit durch die Trennventile 8,8' nur soweit begrenzt ist, daß keine Auswirkungen auf das Bremspedals 3 für den Fahrer spürbar werden. Sobald der Fahrer den Halte-Bremsdruck p1 zum Zeitpunkt T1 erreicht hat, werden die Trennventile 8, 8' zum Zeitpunkt T2, wenn das Signal vorliegt, daß der Fahrer die Bremse gelöst hat, maximal bestromt und damit geschlossen. Nach einer Zeitdauer T3, die nach der modellbasierten Berechnung der Raddruckverluste 71 aufgrund von Leckage ermittelt wird, werden die Trennventile 8, 8' gemäß der Ansteuerstrom-Bremsdruck-Kennline 40 der Figur 2 so angesteuert, daß sie bei aktivierter Pumpe 6 bzw. 7 und geöffneten Umschaltventilen 20 mit einem Ansteuerstrom 45 bestromt werden, der dem Halte-Bremsdruck p1 entspricht. Dabei kann sich aufgrund der "Druckbegrenzungs-Funktion" der so eingestellten Trennventile 8, 8' ein maximaler Halte-Bremsdruck p2 in den Radbremsen einstellen, der durch das Toleranzfeld 41 der Ventile bestimmt ist und nur geringfügig über dem Halte-Bremsdruck p1 liegt. Selbstverständlich ist es auch vorteilhaft möglich, immer den Halte-Bremsdruck p2 gemäß der Kennlinie 42 einzustellen. Dies kann zum Beispiel durch einen dem Ansteuerstrom 45 (Figur 2) fest oder nach einem funktionalen Zusammenhang zugeordneten Wert erfolgen.

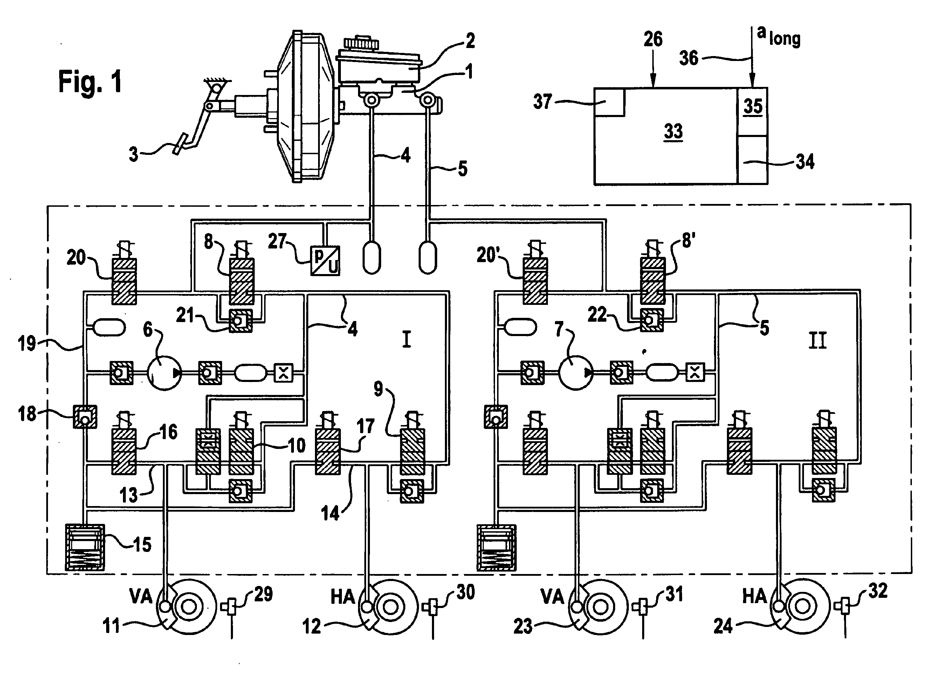

Während der Zeitdauer T4, in der der Bremsdruck auf den Halte-Bremsdruck p1, p2 nachgeregelt wird, wird in Raute 58 abgefragt, ob der Wert des Zählers 37 kleiner als die Summe aus der Leckage Zeitdauer T3 und der Bremsdruck Erhöhungszeitdauer T4 (Offset). Dabei wird, beginnend beim Start A vor Raute 50, die Abfrage der Figur 4 mit einer Taktrate durchlaufen, bis der Bremsdruck zum Zeitpunkt T5 auf den Halte-Bremsdruck p2 eingestellt ist. Erreicht oder überschreitet der Zähler 37 den Wert W_{grenz}, wird im Schritt 59 der Zähler 37 zurückgesetzt, die Pumpe 6, 7 abgeschaltet, die Trennventile 8, 8'mit dem maximalen Ansteuerstrom bestromt und damit, wie in Figur 1 dargestellt, geschlossen und das Umschaltventil stromlos gestellt und damit geschlossen.

Sollte in Raute 51 die Hangneigung nicht erkannt werden oder sollte ein Anfahrwunsch detektiert werden (Raute 59), wird der Zähler jeweils zurückgesetzt, die Anfahrhilfe Funktion gestartet und an den Start A zurückgegangen.

Vorteilhaft können die Druckverluste durch Leckage der Hydraulikkomponenten nach empirischen Vorgaben oder modellbasierter Berechnung ermittelt werden. Über eine Zeitfunktion des Halte-Bremsdruckes oder aber über einen Vergleich zwischen dem Halte-Bremsdruck und aus einer Tabelle ausgelesenen, um die Druckverluste reduzierten Bremsdrücke, kann ein Differenzbremsdruck ermittelt werden, um den der Halte-Bremsdruck nachgeregelt werden muß.Hiermit sind auch für längere Zeiten, Minutenbereich, die Anfahrhilfe Unterstützung mit einer Standard-ESP Hydraulik ohne Zusatzdrucksensorik möglich. Ebenso wird mit dem längeren zeitlichen Druckhalten / Fahrzeughalten ein automatisiertes Halten des Fahrzeugs mittels einer elektrischen Parkbremse möglich. So kann z.B. nach einer Druckhaltezeit von größer 3 Minuten (Ampelstandzeiten sind kleiner), die elektrische Parkbremse automatisiert aktiviert werden.

## Patentansprüche

1. Verfahren zum Halten eines Fahrzeugs an einem Hang durch Einsteuern eines Bremsdrucks in die Radbremsen einer Anfahrhilfe, mit einer Regeleinrichtung (33) zur Durchführung des Verfahrens, **gekennzeichnet durch die Schritte**
a) Ermitteln des zum Halten erforderlichen Bremsdrucks (p1)
b1) Ermitteln einer Zeitspanne (dt) nach Maßgabe einer in einem Modell ermittelten Verringerung des Bremsdrucks, insbesondere aufgrund von Leckage der Bremsanlage, ab dem Lösen des Bremspedals (3) oder
b2) Vergleichen des ermittelten Bremsdrucks mit dem in dem Modell (35) bestimmten tatsächlichen Bremsdruck, ab dem Lösen des Bremspedals (3) und
c) Erhöhen des Bremsdrucks in den Radbremsen, **durch**
c1) Einschalten eines Druckerzeugers (6, 7)
c2) Öffnen eines zwischen Hauptbremszylinder (1) und Saugseite des Druckerzeugers (6, 7) angeordneten Umschaltventils (20, 20')
c3) Steuern eines zwischen Hauptbremszylinder (1) und Radbremsen (11, 12, 23, 24) angeordneten Trennventils (8, 8') derart, daß sich mindestens der zum Halten erforderliche Bremsdruck (p1, p2) in den Radbremsen einstellt.

2. Verfahren nach Anspruch 1, **dadurch gekennzeichnet, daß** zur Ermittlung des zum Halten erforderlichen Bremsdrucks (p1) der vom Fahrer über die Bremspedalbetätigung (3) oder der über einen Druckerzeuger (6, 7) in die Radbremsen eingesteuerte Bremsdruck über einen Drucksensor (27) erfaßt oder über das Modell geschätzt wird.

3. Verfahren nach Anspruch 1 oder 2, **dadurch gekennzeichnet, daß** der Bremsdruck in einem elektrischen bzw. elektronischen Speicher (34) abgelegt wird.

4. Verfahren nach einem der Ansprüche 1 bis 3, **dadurch gekennzeichnet, daß** das Lösen des Bremspedals (3) erfaßt wird.

5. Verfahren nach einem der Ansprüche 1 bis 4, **dadurch gekennzeichnet, daß** der in den Radbremsen verringerte Bremsdruck innerhalb einer in einem funktionalen Zusammenhang zum erforderlichen Halte-Bremsdruck (p1) stehenden Zeitspanne in der Radbremse wieder erhöht wird.

6. Verfahren nach einem der Ansprüche 1 bis 5, **dadurch gekennzeichnet, daß** während der Erhöhung des Bremsdrucks über den eingeschalteten Druckerzeuger (6, 7) mindestens ein analoges oder analogisiertes Ventil (8, 8') auf den Halte-Bremsdruck (p1) so gesteuert wird, daß der in die Radbremsen eingesteuerte Bremsdruck (p1, p2) auf oder oberhalb der unteren Ventilstrom-/Druckkennline (40) und innerhalb der durch ein Toleranzfeld (41) des analogen oder analogisierten Ventils (8, 8') vorgegebenen Abweichung liegt.

7. Verfahren nach Anspruch 6, **dadurch gekennzeichnet, daß** ein in die Radbremsen eingesteuerter maximaler Bremsdruck (p2) nach Maßgabe der oberen Ventilstrom-/Druckkennline (42) des Toleranzfeldes (41) der analogen oder analogisierten Ventile (8, 8') eingestellt wird.

8. Anfahrhilfe zum Halten eines Fahrzeugs an einem Hang, mit einem pedalbetätigten Hauptzylinder (1)und mindestens einer Radbremse (11, 12, 23, 24), die über eine Bremsleitung (4, 5) mit dem Hauptbremszylinder (1) verbunden ist, wobei mit Betätigen des Pedals (3) Druckmittel aus dem Hauptbremszylinder über die Bremsleitung in den Radbremszylinder verdrängt wird, und wobei in der Bremsleitung ein Einlaßventil (9, 10) eingesetzt ist, das in seiner Grundstellung offen ist und in seiner Schaltstellung die Bremsleitung sperrt und einem zwischen dem Einlaßventil (9, 10) und dem Hauptbremszylinder angeordneten Trennventil (8, 8'), das in seiner Grundstellung offen ist und in seiner Schaltstellung die Bremsleitung sperrt und von einer Bypassleitung mit einem Rückschlagventil überbrückt wird, das zur Bremsleitung (4, 5) hin öffnet, und einem Druckerzeuger (6, 7), dessen Druckseite mit der Bremsleitung und deren Saugseite über ein Umschaltventil (20, 20') mit dem Hauptbremszylinder verbunden ist und mit einer elektronischen Regeleinheit (33) zur Ansteuerung der Ventile (8,.8', 9, 10, 16, 17) und des Druckerzeugers (6,7) nach einem Programm, **dadurch gekennzeichnet, daß**
das zwischen Hauptbremszylinder (1) und Einlaßventil angeordnete Trennventil (8, 8') als analoges oder analogisiertes Ventil ausgebildet und nach dem Programm der Regeleinheit (33) über einen Ansteuerstrom derart angesteuert wird, daß es in Abhängigkeit von einem am Hang in einem Modell (35) ermittelten Halte-Bremsdruck (p1) beim Lösen des Pedals nach einem funktionalen Zusammenhang (P/I) durch Einschalten des Druckerzeugers (6, 7) und Öffnen des zwischen Hauptbremszylinder (1) und Saugseite des Druckerzeugers (6, 7) angeordneten Umschaltventils (20, 20') mindestens auf einen auf dem Halte-Bremsdruck (p1) liegenden Bremsdruck (p1, p2) eingestellt wird.

9. Verwendung des zwischen dem Hauptbremszylinder (1) und dem Einlassventil (9, 10) angeordneten analogen oder analogisierten Trennventils (8, 8') der Anfahrhilfe nach Anspruch 8 als regelbares Druckbegrenzungsventil zum Halten eines Fahrzeugs an einem Hang.

10. Anfahrhilfe nach Anspruch 8, **dadurch gekennzeichnet, daß** dem Modell (35) als Eingangsgröße die Signale (36) eines Längsbeschleunigungssensors zugeführt werden.

11. Anfahrhilfe nach Anspruch 8, **gekennzeichnet durch** das Ermitteln des Halte-Bremsdrucks (p1) mittels eines Drucksensors (27), der den vom Fahrer in die Radbremse bzw. Radbremsen eingesteuerten Bremsdruck beim Halten erfaßt.

12. Anfahrhilfe nach Anspruch 8 oder 11, **dadurch gekennzeichnet, daß** der Halte-Bremsdruck (p1) in einem Speicher (34) abgelegt und beim Lösen des Pedals (3) mit in einer Tabelle abgelegten Bremsdrücken (pᵥₑᵣ) verglichen wird, die die um die Leckageverluste verringerten Bremsdrücke wiedergeben und daß der Druckerzeuger (6, 7) eingeschaltet, das Schaltventil (20, 20')geöffnet und das analoge oder analogisierte Trennventil (8, 8') auf den Halte - Bremsdruck (p1, p2) eingestellt wird, wenn der verringerte Bremsdruck (pᵥₑᵣ) einen vorgegebenen Wert erreicht hat.

13. Anfahrhilfe nach einem der Ansprüche 8, 10 oder 11, **dadurch gekennzeichnet, daß** die Regeleinheit (33) einen Zeitgeber oder Zähler (37) aufweist, daß der Wert des Zeitgebers oder Zählers (37) ab dem Lösen des Bremspedals (3) erhöht wird und daß der Druckerzeuger (6, 7) eingeschaltet, das Schaltventil (20, 20') geöffnet und das analoge oder analogisierte Trennventil (8,8') auf den Halte - Bremsdruck (p1, p2) eingestellt wird, wenn der Zeitgeber oder Zähler (37) einen vorgegebenen Wert (W_{grenz})erreicht oder überschritten hat.

14. Anfahrhilfe nach Anspruch 13, **dadurch gekennzeichnet, daß** die Größe des Wertes (w_{grenz}) in Abhängigkeit vom Halte-Bremsdruck vorgegeben wird.

## Claims

1. Method for holding a vehicle on a slope by metering brake pressure into the wheel brakes of a starting aid, with a control unit (33) for implementing the method,
**characterized by** the following steps of:
a) determining the brake pressure (p1) required to hold the vehicle,
b1) determining a time period (dt) according to a reduction of the brake pressure determined in a model, that is in particular due to leakage of the brake system starting from the release of the brake pedal (3), or
b2) comparing the determined brake pressure with the actual brake pressure determined in the model (35) starting from the release of the brake pedal (3), and
c) increase of the brake pressure in the wheel brakes by
c1) switching on a pressure generator (6, 7)
c2) opening a change-over valve (20, 20') that is arranged between the master brake cylinder (1) and the suction side of the pressure generator (6, 7),
c3) controlling a separating valve (8, 8') that is arranged between the master brake cylinder (1) and wheel brakes (11, 12, 23, 24) in such a fashion that at least the brake pressure (p1, p2) required to hold the vehicle develops in the wheel brakes.

2. Method as claimed in claim 1,
**characterized in that** for determining the brake pressure (p1) necessary to hold the vehicle, the brake pressure that is introduced by the driver into the wheel brakes by way of brake pedal application (3) or the brake pressure introduced into the wheel brakes by way of a pressure generator (6, 7) is sensed by a pressure sensor (27) or estimated by way of the model.

3. Method as claimed in claim 1 or 2,
**characterized in that** the brake pressure is stored in an electric or electronic memory (34).

4. Method as claimed in any one of claims 1 to 3,
**characterized in that** the release of the brake pedal (3) is detected.

5. Method as claimed in any one of claims 1 to 4,
**characterized in that** the brake pressure reduced in the wheel brakes is re-increased in the wheel brake within a time period that is in a functional relationship to the necessary holding brake pressure (p1).

6. Method as claimed in any one of claims 1 to 5,
**characterized in that** at least one analog or analogized valve (8, 8') is so controlled towards the holding brake pressure (p1) during the increase of the brake pressure by way of the activated pressure generator (6, 7) that the brake pressure (p1, p2) introduced into the wheel brakes lies at or above the bottom valve current/pressure characteristic curve (40) and within the deviation predetermined by a tolerance field (41) of the analog or analogized valve (8, 8').

7. Method as claimed in claim 6,
**characterized in that** a maximum brake pressure (p2) introduced into the wheel brakes is adjusted in accordance with the top valve current/pressure characteristic curve (42) of the tolerance field (41) of the analog or analogized valves (8, 8').

8. Starting aid for holding a vehicle on a slope, comprising a pedal-operated master cylinder (1) and at least one wheel brake (11, 12, 23, 24) connected to the master brake cylinder (1) by way of a brake line (4, 5), wherein application of pedal (3) causes displacement of pressure fluid out of the master brake cylinder into the wheel brake cylinder by way of the brake line, and wherein an inlet valve (9, 10) is incorporated into the brake line that is normally open in its basic position and shuts off the brake line in its switched position, and a separating valve (8, 8') interposed between the inlet valve (9, 10) and the master brake cylinder that is open in its basic position and closes the brake line in its switched position and is bridged by a bypass line with a non-return valve opening towards the brake line (4, 5), and a pressure generator (6, 7) having its pressure side connected to the brake line and its suction side connected to the master brake cylinder by way of an on-off valve (20, 20'), and an electronic control unit (33) for actuating the valves (8, 8', 9, 10, 16, 17) and the pressure generator (6, 7) according to a program,
c h a r a c t e r i z e d in that the separating valve (8, 8') that is arranged between the master brake cylinder (1) and the inlet valve is configured as an analog or analogized valve and is actuated according to the program of the control unit (33) by way of an actuating current in such a fashion that it is adjusted according to a functional relationship (P/I) by switching on the pressure generator (6, 7) and opening the change-over valve (20, 20') that is arranged between the master brake cylinder (1) and the suction side of the pressure generator (6, 7) to assume at least a brake pressure (p1, p2) lying on the holding brake pressure (p1), depending on the holding brake pressure (p1) determined on a slope in a model (35) upon release of the pedal.

9. Use of the analog or analogized separating valve (8, 8') of the starting aid that is arranged between the master brake cylinder (1) and the inlet valve (9, 10) according to claim 8 as a controllable pressure limiting valve for holding a vehicle on a slope.

10. Starting aid as claimed in claim 8,
**characterized in that** the signals (36) of a longitudinal acceleration sensor are sent as an input quantity to the model (35).

11. Starting aid as claimed in claim 8,
**characterized by** determining the holding brake pressure (p1) by means of a pressure sensor (27) that senses the brake pressure introduced by the driver into the wheel brake(s) when holding the vehicle.

12. Starting aid as claimed in claim 8 or 11,
**characterized in that** the holding brake pressure (p1) is stored in a memory (34) and, upon release of the pedal (3), is compared with brake pressures (p_{red}) stored in a table and representing the brake pressures reduced by the leakage losses, and **in that** the pressure generator (6, 7) is switched on, the on-off valve (20, 20') is opened, and the analog or analogized separating valve (8, 8') is adjusted to the holding brake pressure (p1, p2) when the reduced brake pressure (p_{red}) has reached a predetermined value.

13. Starting aid as claimed in any one of claims 8, 10 or 11,
**characterized in that** the control unit (33) includes a timer or counter (37), **in that** the value of the timer or counter (37) is increased starting from the release of the brake pedal (3), and **in that** the pressure generator (6, 7) is switched on, the on-off valve (20, 20') is opened, and the analog or analogized separating valve (8, 8') is adjusted to the holding brake pressure (p1, p2) when the timer or counter (37) has reached or exceeded a predetermined value (wₗᵢₘᵢₜ).

14. Starting aid as claimed in claim 13,
**characterized in that** the magnitude of the value (wₗᵢₘᵢₜ) is predetermined depending on the holding brake pressure.

## Revendications

1. Procédé pour immobiliser un véhicule sur une pente par introduction d'une pression de freinage dans les freins de roue d'une aide au démarrage avec un dispositif de régulation (33) pour la mise en oeuvre du procédé, **caractérisé par** les étapes suivantes :
a) déterminer la pression de freinage (p1) nécessaire à l'immobilisation
b1) déterminer un intervalle de temps (dt) en fonction d'une réduction, déterminée dans un modèle, de la pression de freinage, en particulier sur la base d'une fuite du système de freinage, à partir du relâchement de la pédale de frein (3) ou
b2) comparer la pression de freinage déterminée à la pression de freinage effective déterminée dans le modèle (35), à partir du relâchement de la pédale de frein (3) et
c) accroître la pression de freinage dans les freins de roue par
c1) activation d'un générateur de pression (6, 7)
c2) ouverture d'une soupape de commutation (20, 20') disposée entre le cylindre de frein principal (1) et le côté aspiration du générateur de pression (6, 7)
c3) commande d'une soupape de séparation (8, 8') disposée entre le cylindre de frein principal (1) et les freins de roue (11, 12, 23, 24), de manière qu'au moins la pression de freinage (p1, p2) nécessaire à l'immobilisation s'établisse dans les freins de roue.

2. Procédé selon la revendication 1, **caractérisé en ce que** pour déterminer la pression de freinage (p1) nécessaire à l'immobilisation, la pression de freinage introduite dans les freins de roue par le conducteur à travers l'actionnement de la pédale de frein (3) ou à travers un générateur de pression (6, 7), est détectée au moyen d'un capteur de pression (27) ou estimée au moyen du modèle.

3. Procédé selon la revendication 1 ou 2, **caractérisé en ce que** la pression de freinage est enregistrée dans une mémoire (34) électrique ou électronique.

4. Procédé selon l'une des revendications 1 à 3, **caractérisé en ce que** le relâchement de la pédale de frein (3) est détecté.

5. Procédé selon l'une des revendications 1 à 4, **caractérisé en ce que** la pression de freinage réduite dans les freins de roue est à nouveau augmentée dans le frein de roue à l'intérieur d'un intervalle de temps qui est en relation fonctionnelle avec la pression de freinage d'arrêt (p1) nécessaire.

6. Procédé selon l'une des revendications 1 à 5, **caractérisé en ce que** pendant l'augmentation de la pression de freinage à travers le générateur de pression (6, 7) activé, au moins une soupape (8, 8') analogique ou rendue analogique est commandée sur la pression de freinage d'immobilisation (p1) de manière que la pression de freinage (p1, p2) introduite dans les freins de roue se situe sur ou au-dessus de la courbe caractéristique courant de soupape/pression inférieure (40) et à l'intérieur de l'écart prédéfini par une plage de tolérance (41) de la soupape (8, 8') analogique ou rendue analogique.

7. Procédé selon la revendication 6, **caractérisé en ce qu'**une pression de freinage maximale (p2) introduite dans les freins de roue est réglée en fonction de la courbe caractéristique courant de soupape/pression supérieure (42) de la plage de tolérance (41) des soupapes (8, 8') analogiques ou rendues analogiques.

8. Aide au démarrage pour immobiliser un véhicule sur une pente, comportant un cylindre principal (1) actionné par une pédale et au moins un frein de roue (11, 12, 23, 24) qui est relié au cylindre de frein principal (1) par une conduite de frein (4, 5), dans laquelle lorsque la pédale (3) est actionnée un fluide sous pression est chassé du cylindre de frein principal, à travers la conduite de frein, dans les cylindres de frein de roue, et dans lequel dans la conduite de frein est insérée une soupape d'admission (9, 10) qui est ouverte dans sa position de base et ferme la conduite de frein dans sa position de commande et comportant une soupape de séparation (8, 8') disposée entre la soupape d'admission (9, 10) et le cylindre de frein principal, qui dans sa position de base est ouverte et ferme la conduite de frein dans sa position de commande, et est pontée par une conduite de dérivation avec un clapet de non-retourr qui s'ouvre vers la conduite de frein (4, 5), et comportant un générateur de pression (6, 7) dont le côté pression est relié à la conduite de frein et dont le côté aspiration est relié au cylindre de frein principal à travers une soupape de commutation (20, 20'), et comportant une unité de régulation électronique (33) pour la commande des soupapes (8, 8', 9, 10, 16, 17) et du générateur de pression (6, 7) selon un programme, **caractérisée en ce que** la soupape de séparation (8, 8') disposée entre le cylindre de frein principal (1) et la soupape d'admission, est réalisée en tant que soupape analogique ou rendue analogique et est commandée selon le programme de l'unité de régulation (33), par un courant de commande, de manière qu'en fonction d'une pression de freinage d'immobilisation (p1), déterminée sur la pente dans un modèle (35), il soit réglé au moins une pression de freinage (p1, p2) se situant à la pression de freinage d'immobilisation (p1), lors du relâchement de la pédale, suivant une relation fonctionnelle (P/I), par activation du générateur de pression (6, 7) et ouverture de la soupape de commutation (20, 20') disposée entre le cylindre de frein principal (1) et le côté aspiration du générateur de pression (6, 7).

9. Utilisation de la soupape de séparation (8, 8') analogique ou rendue analogique, disposée entre le cylindre de frein principal (1) et la soupape d'admission (9, 10), de l'aide au démarrage, selon la revendication 8, en tant que soupape de limitation de pression réglable pour immobiliser un véhicule sur une pente.

10. Aide au démarrage selon la revendication 8, **caractérisée en ce qu'**au modèle (35) sont envoyés, comme grandeur d'entrée, les signaux (36) d'un capteur d'accélération longitudinal.

11. Aide au démarrage selon la revendication 8, **caractérisée par** la détermination de la pression de freinage d'immobilisation (p1) au moyen d'un capteur de pression (27) qui détecte à l'arrêt la pression de freinage introduite par le conducteur dans le ou les freins de roue.

12. Aide au démarrage selon la revendication 8 ou 11, **caractérisée en ce que** la pression de freinage d'immobilisation (p1) est enregistrée dans une mémoire (34) et, au relâchement de la pédale (3), est comparée à des pressions de freinage (pᵥₑᵣ) enregistrées dans un tableau, lesquelles traduisent les pressions de freinage réduites des pertes par fuite, et **en ce que** le générateur de pression (6, 7) est activé, la soupape de commutation (20, 20') est ouverte et la soupape de séparation (8, 8') analogique ou rendue analogique est réglée sur la pression de freinage d'immobilisation (p1, p2) lorsque la pression de freinage réduite (pᵥₑᵣ) a atteint une valeur prédéfinie.

13. Aide au démarrage selon l'une des revendications 8, 10 ou 11, **caractérisée en ce que** l'unité de régulation (33) comporte une horloge ou un compteur (37), **en ce que** la valeur de l'horloge ou du compteur (37) est augmentée à partir du relâchement de la pédale de frein (3), et **en ce que** le générateur de pression (6, 7) est activé, la soupape de commutation (20, 20') est ouverte et la soupape de séparation (8, 8') analogique ou rendue analogique est réglée sur la pression de freinage d'immobilisation (p1, p2) lorsque l'horloge ou le compteur (37) a atteint ou dépassé une valeur prédéfinie (W_{grenz}).

14. Aide au démarrage selon la revendication 13, **caractérisé en ce que** la grandeur de la valeur (W_{grenz}) est prédéfinie en fonction de la pression de freinage d'arrêt.
